# EUROPÄISCHE PATENTSCHRIFT

(11) **EP 0 640 762 B1**
(45) Veröffentlichungstag und Bekanntmachung des Hinweises auf die Patenterteilung: **23.10.1996**
(21) Anmeldenummer: 93113673.3
(22) Anmeldetag: 26.08.1993
(51) Int. Cl.: F02P 15/08, F02P 9/00, F02P 15/00, F02D 41/06, G01M 15/00, F02P 7/03

(54) **Zylinder Synchronisation einer Mehrzylinder Brennkraftmaschine durch Detektion eines gezielten Verbrennungsaussetzers**
Cylinder synchronization of a multi-cylinder internal combustion engine via detection of a directed misfire
Synchronisation de cylindre d'un moteur à combustion interne à plusieurs cylindres par détection d'un raté de combustion spécifique

(43) Veröffentlichungstag der Anmeldung: 01.03.1995
(73) Patentinhaber: SIEMENS AKTIENGESELLSCHAFT, 80333 München (DE)
(72) Erfinder: Angermaier, Anton, Dipl.-Ing. (FH), D-84034 Landshut (DE)

(56) Entgegenhaltungen:
- EP-A- 0 371 158
- WO-A-89/08778
- DE-A- 3 511 432
- DE-A- 4 033 148
- DE-A- 4 143 094
- GB-A- 2 255 831
- US-A- 4 690 124
- US-A- 4 870 587
- US-A- 5 174 267
- PATENT ABSTRACTS OF JAPAN, vol. 13, no. 489 (M-888) 7. November 1989 & JP-A-01 195 975

## Beschreibung

Die Erfindung betrifft ein Verfahren zur Synchronisation sequentieller Kraftstoff- oder Zünd-Verteilung auf die Zylinder einer Viertakt-Brennkraftmaschine gemäß dem Oberbegriff von Patentanspruch 1.

Zur Identifikation der Zylinder einer Mehrzylinder-Brennkraftmaschine werden üblicherweise Signale von Nockenwellensensoren allein oder von diesen und zusätzlichen Kurbelwellensensoren in einem Motorsteuergerät verarbeitet, wie dem US-Patent No. US-A-4 459 968 zu entnehmen ist.

Zwar ist die Zündreihenfolge der einzelnen Zylinder festgelegt (bei Vierzylinder-Viertaktmotoren beispielsweise I-III-IV-II), sie erstreckt sich aber über zwei ganze Umdrehungen der Kurbelwelle (KW), mit zwei KW-Referenzsignalen pro Motorzyklus von 720°KW (auch Arbeitsspiel genannt). Ohne Referenzsignal pro Motorzyklus (pro Nockenwellenumdrehung bzw. pro zwei Kurbelwellenumdrehungen) - ist eine Synchronisation (eindeutige Zuordnung von Kraftstoffeinspritzung und Zündung zu den einzelnen Zylindern) nicht möglich, da während der gleichen Kurbelwellenstellung, beispielsweise bei einem Vierzylindermotor, sowohl Zylinder I als auch Zylinder IV bzw. sowohl Zylinder II als auch Zylinder III dieselbe Kolbenstellung und Kolbenbewegungsrichtung aufweisen, allerdings in unterschiedlichen Motortakten (z.B. Zylinder I: Verdichten + Zünden und Zylinder IV: Ausstoßen des verbrannten Gemischs, oder umgekehrt). Ein Motortakt erstreckt sich über 180°KW.

Es sind zwar die Zündkerzen und Kraftstoff-Einspritzventile vom Motorsteuergerät gezielt ansteuerbar, es ist jedoch zunächst allein aufgrund der Kurbelwellenstellung der richtige Zylinder nicht exakt bestimmbar, da bei einer bestimmten Kurbelwellenstellung beispielsweise entweder Zylinder I oder Zylinder IV zu zünden oder mit Kraftstoff zu versorgen ist. Es ist aber nicht bekannt, welcher von beiden Zylindern nun tatsächlich zu bedienen ist. Dazu ist eine Identifikation des richtigen Zylinders (Synchronisation) erforderlich, die üblicherweise mittels eines Nockenwellensensors durchgeführt wird.

Aus DE-A-4 143 094 ist ein Kraftstoff-Einspritzsystem ohne Nockenwellengeber bekannt, bei dem nach dem Start Drehrichtung und Winkelstellung der Kurbelwelle ermittelt werden und bei bestimmten Kurbelwellenstellungen in bestimmte Zylinder über mehrere Kurbelwellenumdrehungen Kraftstoff eingespritzt wird. Aus Veränderungen der Rotationsgeschwindigkeit der Kurbelwelle wird festgestellt, ob Zündungen stattgefunden haben oder nicht. Bei ausgebliebenen Zündungen wird die Einspritzreihenfolge umgestellt.

Aus DE-A-3 511 432 ist ein Verfahren zur Identifizierung eines eine unerwünschte Laufunruhe verursachenden Zylinders bekannt, wobei die Einspritzdauer eines bestimmten Zylinders verändert und damit eine zusätzliche Laufunruhe erzeugt wird. Aus dem Kurbelwinkelabstand zwischen der zusätzlichen und der unerwünschten Laufunruhe wird unter Berücksichtigung der Kurbelwellendrehzahl der die unerwünschte Laufunruhe verursachende Zylinder ermittelt. Dazu muß die Brennkraftmaschine aber bereits synchronisiert sein.

Es ist Aufgabe der Erfindung, ein Verfahren zu entwickeln, welches in der Lage ist, die Synchronisation ohne Nockenwellensensor allein mit Hilfe eines Kurbelwellen-Sensors bzw. seiner Ausgangssignale ohne Schädigung von Aggregaten, insbesondere eines Katalysators, durchzuführen.

Die Erfindung wird anhand der Zeichnung näher erläutert. Es zeigen:
- Figur 1: eine schematische Darstellung einer Brennkraftmaschine mit elektronischem Motorsteuergerät,
- Figur 2: ein Diagramm über die Wirkungsweise eines ersten Ausführungsbeispiels mit Aussetzen der Zündung, und
- Figuren 3 und 4: Diagramme über die Wirkungsweisen eines zweiten Ausführungsbeispiels mit Aussetzen der Kraftstoff-Einspritzung.

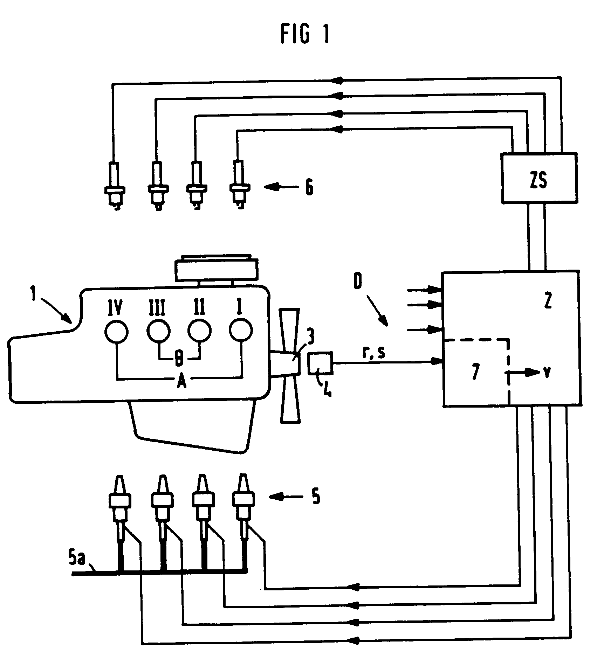

Figur 1 zeigt in schematischer Darstellung eine Brennkraftmaschine 1 mit vier Zylindern I,II,III und IV, mit einer Kurbelwelle 3, deren Drehbewegungen von einem Kurbelwellensensor 4 erfaßt werden, mit jeweils einem über eine Kraftstoffleitung 5a versorgten Kraftstoff-Einspritzventil 5 für zylinderindividuelle Kraftstoff-Einspritzung und einer Zündkerze 6 für jeden Zylinder. Die Betätigung der Zündkerzen (über eine oder mehrere Zündspulen Zs) und Einspritzventile erfolgt durch ein an sich bekanntes elektronisches Motorsteuergerät 2 aufgrund der ihm zugeführten Eingangssignale D.

Zu diesen Eingangssignalen des Motorsteuergerätes 2 gehören auch die Ausgangssignale des Kurbelwellensensors 4. Diese bestehen aus von dem Motorsteuergerät 2 benötigten Sensorsignalen s (Zahn- und/oder Segmentsignalen) und einem einer bestimmten Kurbelwellenstellung zugeordneten Referenzsignal r (letzteres kann beispielsweise bei Segmentgebern einem Segmentbeginn oder bei Zahngebern einer größeren Zahnlücke zugeordnet sein).

Die Sensorsignale und das Referenzsignal werden auch einer an sich bekannten, in diesem Ausführungsbeispiel im Motorsteuergerät 2 integrierten Einrichtung 7 zugeführt, welche bei Erkennen eines Verbrennungsaussetzers in einem der Zylinder der Brennkraftmaschine ein Signal v an andere Schaltungsteile des Motorsteuergeräts 2 abgibt.

Mögliche Funktionsweisen der Einrichtung 7 sind aus vielen Druckschriften, beispielsweise aus der internationalen Patentanmeldung WO-A-91/02140 bekannt. Dieser Druckschrift ist ein Verfahren zum Erkennen von irregulären Verbrennungen in den Zylindern einer Brennkraftmaschine durch Auswertung der sogenannten Laufunruhe zu entnehmen, bei dem der Drehzahlbeitrag für jeden Zylinder an zwei bestimmten Zylinderstellungen (nach dem oberen Totpunkt im Verbrennungstakt) erfaßt und daraus ein Beschleunigungswert der Kurbelwelle für jeden Motortakt ermittelt wird. Eine irreguläre Verbrennung wird erkannt, wenn ein Beschleunigungswert einen vorgegebenen Grenzwert unterschreitet.

Durch geeignete Wahl des Grenzwertes g lassen sich Verbrennungsaussetzer von normalen und "mageren" Verbrennungen unterscheiden. Wenn ein Beschleunigungswert den Grenzwert unterschreitet, so gibt die Einrichtung 7 ein Ausgangssignal v weiter.

Zur Durchführung des Verfahrens der Synchronisation ohne Nokkenwellensensor wird die Brennkraftmaschine zunächst beim Anlassen und darüber hinaus solange mit gruppenweiser Einspritzung und Zündung betrieben, bis sich ein vorgegebener Motorbetriebszustand eingestellt hat.

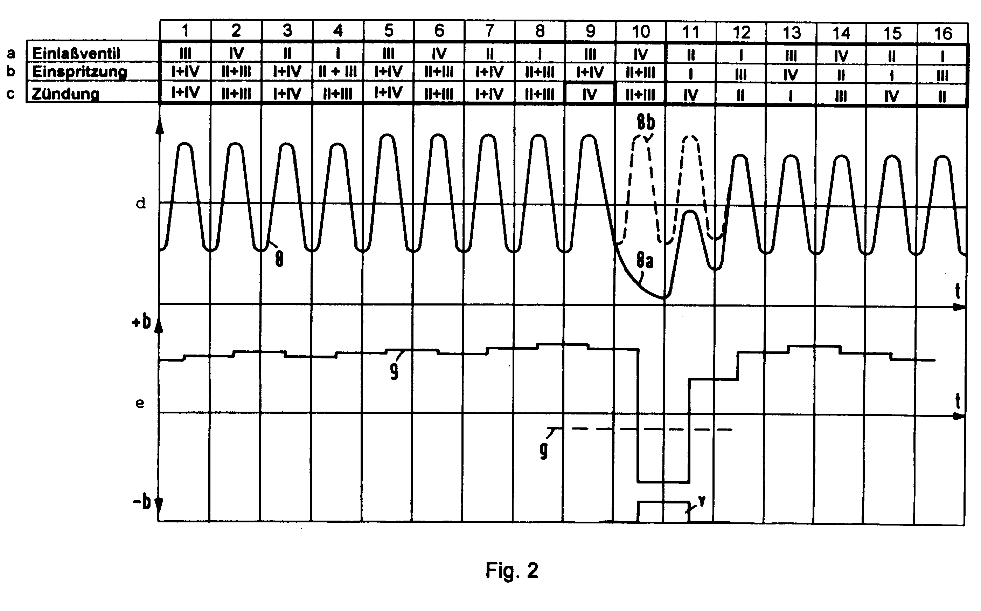

"Gruppenweise" bedeutet, daß beispielsweise bei einer Vierzylinder-Brennkraftmaschine die Zylinder I und IV zu einer Gruppe A sowie die Zylinder II und III zu einer Gruppe B zusammengefaßt werden, wobei Kraftstoffeinspritzung und Zündung bei beiden Zylindern einer Gruppe gleichzeitig erfolgen, siehe Zeilen b und c in den Figuren 2 bis 4. Das bedeutet aber, daß in Gruppe A bei Zündung im richtigen Zeitpunkt für Zylinder I die Zündung für Zylinder IV im Ausstoßtakt erfolgt (und umgekehrt), wo sie zwar fehl am Platz ist, aber keinen Schaden anrichtet. Gleiches gilt für Gruppe B.

Gruppenweise Kraftstoffeinspritzung bedeutet in diesem Fall zwei Einspritzvorgänge in einen Zylinder pro Zündung, beispielsweise einmal während des Kompressionstaktes und einmal während des Ausstoßtaktes, immer bei geschlossenem Einlaßventil , wobei die eingespritzte Kraftstoffmenge bei geöffnetem Einlaßventil durch die einströmende Luft mit in den Zylinder gerissen wird. Um kein zu fettes Gemisch zu erhalten, darf bei gruppenweiser Einspritzung (zweimal pro Zündung) nur jeweils die Hälfte der erforderlichen Kraftstoffmenge eingespritzt werden.

Vorgegebene Motorbetriebszustände sollen in diesem Ausführungsbeispiel solche Zustände sein, bei denen der Anlaßvorgang erfolgreich beendet ist und sich die Brennkraftmaschine in einem Teillastbereich (z.B. 30%< Last < 80%) bei Motordrehzahlen in einem Bereich zwischen 1000 und 2000 U/min und ohne dynamische Drehzahländerungen befindet.

Ein erstes Ausführungsbeispiel des erfindungsgemäßen Verfahrens wird anhand eines Synchronisationsvorgangs bei einer Brennkraftmaschine beschrieben, bei der im Normalbetrieb (nach dem Anlassen und Synchronisieren) sowohl die Kraftstoffeinspritzung als auch die Zündung (über Einzelzündspulen) zylinderindividuell durchgeführt werden.

In den Figuren 2 bis 4 sind Zeilen a bis c sowie Diagramme d und e in Spalten 1 bis 16 dargestellt. Die Spalten sind den einzelnen, fortlaufend (in der hier gewählten Zündreihenfolge I-III-IV-II) sich wiederholenden Motortakten zugeordnet, wobei
Spalte 1 = Kompressionstakt + Zündung im Zylinder I (Z.I)
Spalte 2 = Expansionstakt im Zylinder I (= Zündung Z.III)
Spalte 3 = Ausstoßtakt im Zylinder I (= Zündung Z.IV)
Spalte 4 = Ansaugtakt im Zylinder I (= Zündung Z.II)
u.s.w. ist.

In Zeile a ist angegeben, bei welchem Zylinder in den einzelnen Motortakten das Einlaßventil geöffnet ist, beginnend in Spalte 1 mit Zylinder III und fortlaufend in der Zündreihenfolge I-III-IV-II.

Zeile b zeigt, wann in welche Zylinder (bzw. deren Ansaugstutzen) Kraftstoffeinspritzungen erfolgen, wobei in den Takten 1 bis 10 "gruppenweise" jeweils zweimal die halbe Kraftstoffmenge den einzelnen Zylindern zugeteilt wird und ab Takt 11 zylinderindividuell die volle Menge zum richtigen Zeitpunkt eingespritzt wird. Dabei muß beim Übergang auf zylinderindividuelle Einspritzung darauf geachtet werden, daß die bereits vor der Synchronisation mit der halben Kraftstoffmenge versorgten Zylinder bei der ersten Einspritzung nach der Synchronisation ebenfalls nur die halbe Kraftstoffmenge erhalten!

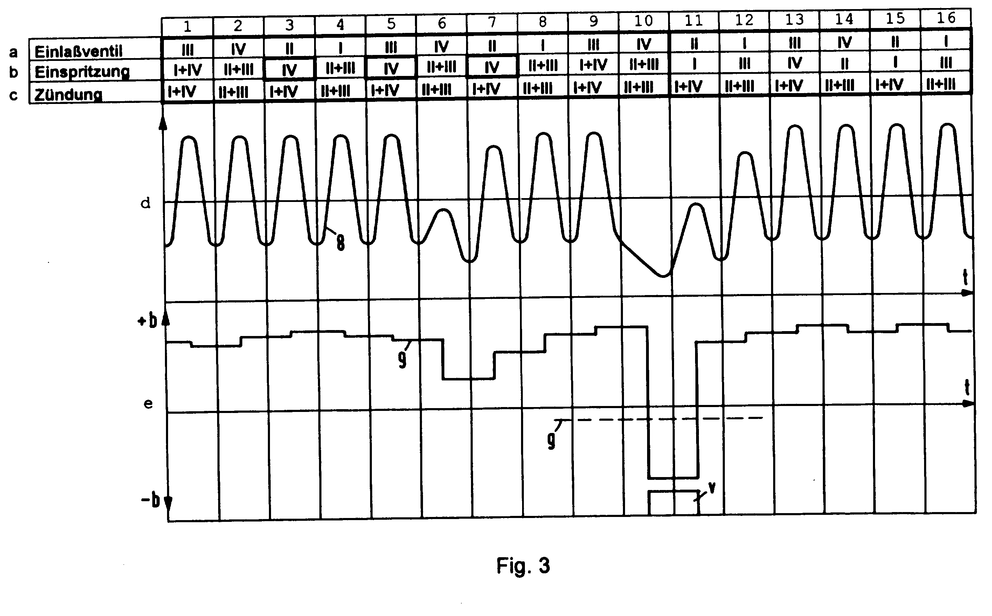

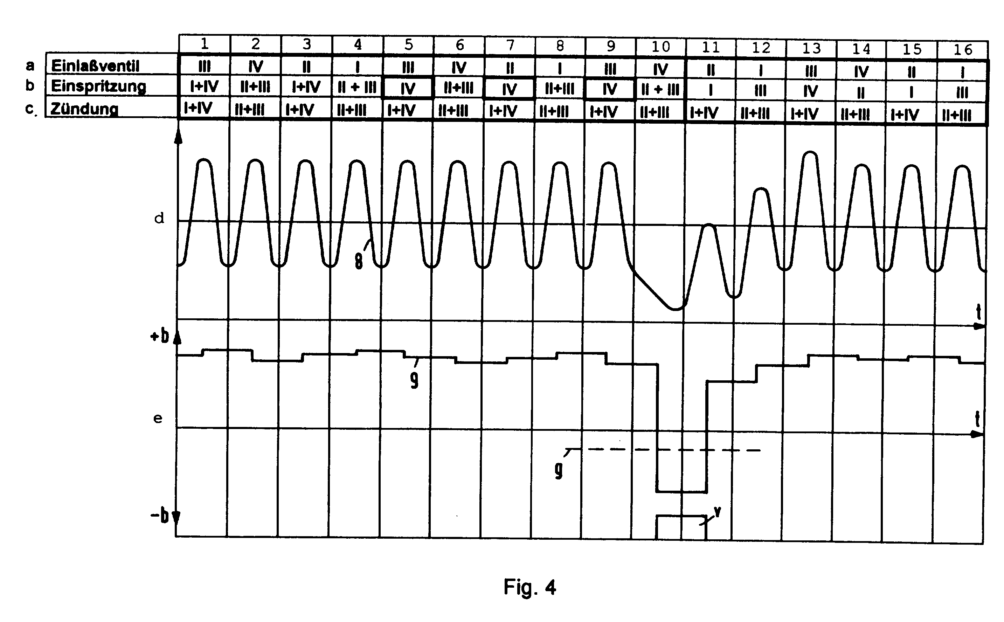

In Zeile c ist angegeben, wann welche Zylinder gezündet werden, wobei wieder in den Takten 1 bis 10 gruppenweise und in den Takten 11 bis 16 zylinderindividuell (Figur 2) oder gruppenweise (Figuren 3 und 4) gezündet wird. Die richtigen Zündzeitpunkte für Zylinder I sollen in den Takten 1, 5, 9 und 13 liegen.

Im Diagramm d ist über der Zeit die Umlaufgeschwindigkeit 8 der Kurbelwelle dargestellt, die in jedem Motortakt von den Verbrennungsvorgängen in den einzelnen Zylindern beschleunigt und anschließend wieder etwas verzögert wird. Findet in einem Motortakt keine Verbrennung statt (Takt 10), so wird die Kurbelwelle in diesem Takt nicht beschleunigt, sondern nur verzögert.

Diagramm e zeigt (wegen der Meß- und Rechentätigkeit um etwa einen halben Motortakt verzögert) die in den einzelnen Takten von der Einrichtung 7 aus jeweils zwei während eines Verbrennungsvorganges gemessenen Geschwindigkeitswerten ermittelten positiven (+b) oder negativen (-b) Beschleunigungswerte 9 der Kurbelwelle, die mit einem vorgegebenen Grenzwert g verglichen werden. In dem Fall (Takt 10), daß ein Beschleunigungswert 9 kleiner als der vorgegebene Grenzwert g ist, der einem bestimmten Verzögerungswert entspricht, wird ein Signal v weitergegeben. Es können aber auch andere bekannte Verfahren eingesetzt werden.

Bei dem ersten Ausführungsbeispiel nach Figur 2 erfolgen Kraftstoffeispritzung (Zeile b) und Zündung (Zeile c) vom Beginn des Anlaßvorganges bis zur Synchronisation (Spalten 1 bis 10) gruppenweise. Wird ein vorgegebener Betriebszustand erreicht (beispielsweise in dem der Spalte 8 zugeordneten Takt), so wird die nächste Zündung im Zylinder I (in Figur 2 in der fett umrandeten Zelle im Schnittpunkt von Zeile c und Spalte 9) unterdrückt. Im Takt 9 wird dementsprechend nur Zylinder IV (in dessen Ausstoßtakt) gezündet.

Wird daraufhin in dem der Zündung folgenden Takt 10 (Verbrennungstakt im Zylinder I) durch die Einrichtung 7 infolge einer gemessenen Verzögerung (durchgezogene Linie 8a im Diagramm d) ein Verbrennungsaussetzer festgestellt (Beschleunigungswert 9 kleiner als der Grenzwert g in Diagramm e), so ist das der entscheidende Hinweis, daß im Takt 9 zum richtigen Zündzeitpunkt des Zylinders I keine Zündung erfolgt ist, daß also folgerichtig Takt 9 und jeder vierte folgende Takt der Kompressions- und Zündtakt des Zylinders I ist, und daß der nach dem Zünden im Zylinder I vom Kolben erreichte obere Totpunkt (OT) demnach der OT (Zünd-OT bzw. Hochdruck-OT) ist, auf den in diesem Ausführungsbeispiel das Motorsteuergerät 2 nun die anderen Zylinder in der Zündreihenfolge I-III-IV-II synchronisiert.

Mit dieser Synchronisation kann das Motorsteuergerät 2 nun ab Takt 11 auf zylinderindividuelle Kraftstoffeinspritzung (unter Berücksichtigung bereits eingespritzter Kraftstoff-Teilmengen) und Zündung umstellen, wie in den Spalten 11 bis 16 der Zeilen b und c dargestellt ist, ohne daß ein Nockenwellen-Referenzsignal dazu erforderlich war.

Wäre aber der Zündzeitpunkt in Takt 9 der richtige Zündzeitpunkt nicht für Zylinder I, sondern für Zylinder IV und damit der Ausstoßtakt für Zylinder I, so würde die im Zylinder I (in dessen Ausstoßtakt) ausgesetzte Zündung im darauffolgenden Takt 10 eine Verbrennung (im Zylinder IV) nicht verhindern können; diese würde stattfinden (strichlierte Kurve 8b in Diagramm d).Das wäre aber dann der Hinweis dafür, daß eine Zündung im Ausstoßtakt des Zylinders I erfolgt ist, daß also folgerichtig nicht Takt 9, sondern Takt 7 und jeder vierte folgende Takt der Kompressions- und Zündtakt des Zylinders I wäre, auf den bzw. auf den ihm nachfolgenden OT das Motorsteuergerät 2 zu synchronisieren und mit dieser Synchronisation dann ab Takt 11 auf zylinderindividuelle Kraftstoffeinspritzung und Zündung umzustellen hätte.

Ein zweites Ausführungsbeispiel wird anhand der Figuren 3 und 4 für eine Brennkraftmaschine beschrieben, bei der das Motorsteuergerät nach Vorliegen eines vorgegebenen Betriebszustandes zur Durchführung der Synchronisation die Kraftstoffeinspritzung aussetzt und im Normalbetrieb (nach dem Anlassen und Synchronisieren) auf zylinderindividuelle Kraftstoffeinspritzung umstellt, die Zündung aber weiter gruppenweise durchführt, weil beispielsweise die Zündung mit einer Doppelfunkenzündspule ausgerüstet ist. Das Motorsteuergerät könnte jedoch auch hier mit zylinderindividueller Zündung arbeiten, ohne die Wirkungsweise zu beeinträchtigen.

Zu Figur 3: wird während der gruppenweisen Einspritzung und Zündung ein vorgegebener Betriebszustand erreicht, hier beispielsweise in Takt 3, so werden die nächsten drei Kraftstoff-Einspritzungen in den Zylinder I in den Takten 3, 5 und 7 (fett umrandete Zellen in Zeile b, Spalten 3, 5 und 7) ausgesetzt. Das hat zur Folge, daß auf die der ersten ausgesetzten Einspritzung (Takt 3) folgende Zündung in Takt 5 eine "magere" Verbrennung in Takt 6 folgt, da der Zylinder I nur die halbe Kraftstoffmenge in Takt 2 erhalten hat, nicht aber auch in Takt 3. Dies äußert sich in einer geringeren Beschleunigung (Takt 6 in Diagramm e), die aber den Grenzwert g nicht unterschreitet.

Auf die nächste (zeitrichtige) Zündung in Takt 9 folgt nun in Takt 10 ein Verbrennungsaussetzer, da ja in Takt 5 und 7 kein Kraftstoff in Zylinder I eingespritzt wurde. Das ist auch hier der entscheidende Hinweis, daß der dem Verbrennungsaussetzer vorausgegangene Takt 9 und jeder vierte folgende Takt der Kompressions- und Zündtakt des Zylinders I ist, und daß der nach dem Zünden im Zylinder I vom Kolben erreichte obere Totpunkt demnach der OT ist, auf den auch in diesem Ausführungsbeispiel die anderen Zylinder in der Zündreihenfolge I-III-IV-II synchronisiert werden.

Damit kann nun ab Takt 11 auf zylinderindividuelle Kraftstoffeinspritzung umgestellt werden, wie in den Spalten 11 bis 16 der Zeile b dargestellt ist, ohne daß auch hier ein Nockenwellen-Referenzsignal dazu erforderlich war.

Figur 4 zeigt das gleiche zweite Ausführungsbeispiel unter der Annahme, daß der vorgegebene Betriebszustand erst in Takt 5 erreicht wird. Dann werden die darauffolgenden drei Kraftstoff-Einspritzungen in den Zylinder I in den Takten 5, 7 und 9 (fett umrandete Zellen in Zeile b, Spalten 5, 7 und 9) ausgesetzt. Auf die der ersten und zweiten ausgesetzten Einspritzung (Takte 5 und 7) folgende Zündung in Takt 9 folgt nun in Takt 10 ein Verbrennungsaussetzer, so daß auch in diesem Fall folgt, daß der dem Verbrennungsaussetzer vorausgehende Takt 9 und jeder vierte folgende Takt der Kompressionsund Zündtakt des Zylinders I ist, und daß der nach dem Zünden im Zylinder I vom Kolben erreichte obere Totpunkt demnach der OT ist, auf den das Motorsteuergerät 2 auch in diesem Ausführungsbeispiel die anderen Zylinder in der Zündreihenfolge I-III-IV-II synchronisiert.

Auf die im Takt 9 ausgesetzte Kraftstoff-Einspritzung folgt im Takt 14 keine magere Verbrennung, da nach der Umstellung ab Takt 11 auf zylinderindividuelle Kraftstoff-Einspritzung dem Zylinder I ab Takt 11 und in jedem vierten folgenden Takt die volle Kraftstoffmenge zugeteilt wird.

Da bekannte Motorsteuergeräte zur Erledigung der komplexen Rechen- und Steueroperationen üblicherweise mit Mikroprozessoren ausgerüstet sind, sind die Änderungen bzw. Ergänzungen für die Durchführung des beschriebenen Verfahrens der Synchronisation im wesentlichen durch Änderungen und Ergänzungen der vorhandenen Mikroprozessor-Programme zu erreichen.

## Patentansprüche

1. Verfahren zur Synchronisation sequentieller Kraftstoff- oder Zündverteilung auf die Zylinder (I,II,III,IV) einer Viertakt-Brennkraftmaschine mit gerader Zylinderzahl in Abhängigkeit von den Signalen eines Kurbelwellensensors, wobei immer zwei Zylinder, deren Kolben jeweils gleiche Stellung und Bewegungsrichtung aufweisen, eine Gruppe (A: I+IV, B: II+III) bilden,
**dadurch gekennzeichnet**,
daß vom Motorstart bis zum Erreichen eines vorgegebenen Motorbetriebszustandes Kraftstoffeinspritzung und Zündung für jede Gruppe (A, B) gemeinsam durchgeführt werden,
daß nach Erreichen des vorgegebenen Motorbetriebszustandes entweder Kraftstoffeinspritzung oder Zündung eines vorbestimmten Zylinders (I) für wenigstens einen Motortakt ausgesetzt wird,
daß bei einer nicht stattgefundenen Verbrennung innerhalb von zwei Motorzyklen (Arbeitsspielen), die mit dem Motortakt beginnen, in welchem die Kraftstoffeinspritzung oder die Zündung erstmals ausgesetzt wird, auf den vorbestimmten Zylinder (I) und andernfalls auf den anderen Zylinder (IV) derselben Gruppe (A) synchronisiert wird, und
daß nach durchgeführter Synchronisation auf sequentielle Kraftstoffeinspritzung oder Zündung umgeschaltet wird.

2. Verfahren nach Anspruch 1, dadurch gekennzeichnet, daß eine nicht stattgefundene Verbrennung erkannt wird, wenn ein Beschleunigungswert der Kurbelwelle kleiner als ein vorgegebener Grenzwert (g) ist.

## Claims

1. Method for synchronizing sequential fuel or ignition distribution with the cylinders (I, II, III, IV) of a four-stroke internal combustion engine with an even number of cylinders as a function of the signals from a crankshaft sensor, two cylinders, the pistons of which each have the same position and direction of movement, always forming a group (A: I+IV, B: II+III), characterized in that the fuel injection and ignition are carried out jointly for each group (A, B) from the starting of the engine until a predetermined engine operating state is reached, in that, after the predetermined engine operating state is reached, either fuel injection or ignition of a predetermined cylinder (I) is discontinued for at least one engine stroke, in that, if combustion has not taken place within two engine cycles (work cycles) which commence with the engine stroke in which fuel injection or ignition is discontinued for the first time, distribution is synchronized with the predetermined cylinder (I) and, otherwise, with the other cylinder (IV) of the same group (A), and in that, after synchronization has been carried out, a change-over is made to sequential fuel injection or ignition.

2. Method according to Claim 1, characterized in that combustion which has not taken place is recognized when an acceleration value of the crankshaft is lower than a predetermined limit value (g).

## Revendications

1. Procédé de synchronisation de répartition séquentielle de combustible ou d'allumage sur les cylindres (I, II, III, IV) d'un moteur à combustion interne à quatre temps comportant un nombre de cylindre adapté, en fonction des signaux reçus d'un détecteur de vilebrequin, et dans lequel toujours deux cylindres, dont les pistons présentent chacun la même position et le même sens de déplacement, forment un groupe (A: I+IV, B: II+III),
caractérisé
- en ce que, depuis le démarrage du moteur jusqu'à ce que soit atteint un état de fonctionnement prédéfini du moteur, l'injection de carburant et l'allumage sont exécutés en commun pour chaque groupe (A, B),
- en ce qu'après qu'a été atteint l'état de fonctionnement prédéfini du moteur, soit l'injection de carburant, soit l'allumage, d'un cylindre choisi à l'avance (I) est supprimé pour au moins un temps-moteur,
- en ce que, dans le cas où une combustion n'a pas eu lieu à l'intérieur de deux cycles moteur (jeux de fonctionnement), qui commencent avec le temps-moteur dans lequel l'injection de carburant ou l'allumage sont supprimés pour la première fois, on procède à la synchronisation sur la base du cylindre (I) choisi à l'avance, et, dans l'autre cas, sur l'autre cylindre (IV) du même groupe (A), et
- en ce que, lorsque la synchronisation a été exécutée, on passe à l'injection de carburant séquentielle ou à l'allumage séquentiel.

2. Procédé suivant la revendication 1, caractérisé en ce qu'une combustion n'ayant pas eu lieu est détectée quand une valeur d'accélération du vilebrequin est plus petite qu'une valeur limite prédéfinie (g).
